# EUROPEAN PATENT APPLICATION

(11) **EP 4 570 477 A1**
(43) Date of publication of application: **18.06.2025**
(21) Application number: 24214329.5
(22) Date of filing: 20.11.2024
(51) Int. Cl.: B29C 63/08, H01B 13/08

(54) **HEAD FOR TAPING DEVICE**

(30) Priority: 13.12.2023 KR 20230180629
(71) Applicant: TSMOST Co., Ltd, Cheonan-si, Chungcheongnam-do 31045 (KR); YERANG TECH, Cheonan-si, Chungcheongnam-do 31029 (KR)
(72) Inventor: KIM, Choon Sik, 31168 Chungcheongnam-do (KR); KIM, Sung Jun, 05510 Seoul (KR); LEE, Sung Hyun, 16533 Gyeonggi-do (KR); SHIN, Seung Kwan, 15002 Gyeonggi-do (KR)
(74) Representative: Murgitroyd & Company

(57) **Abstract**

Disclosed is a head for a taping device. The head for a taping device according to various embodiments of the present disclosure may include: a housing including a plate having a cutout portion configured to allow a bus bar to pass therethrough, and an internal through hole communicating with the cutout portion; a plurality of first bearings coupled to the housing and arranged around the internal through hole along a first circular ring shape; a first ring gear having a first opening configured to allow the bus bar to pass therethrough, and an inner circumferential surface rotatably supported by the first bearing; a first tape feeder including a first abutment coupled to the first ring gear and a first mounting roller rotatably coupled to the first abutment; a first driver coupled to the housing and configured to rotate the first ring gear; a plurality of second bearings coupled to the housing, spaced outward from the first bearings, and arranged along a second circular ring shape; a second ring gear having a second opening configured to allow the bus bar to pass therethrough, and an inner circumferential surface rotatably supported by the second bearings; a second tape feeder including a second abutment coupled to the second ring gear and a second mounting roller rotatably coupled to the second abutment; and a second driver coupled to the housing and configured to rotate the second ring gear. As a result, two types of tape can be wound around the busbar in one process.

## Description

### CROSS-REFERENCE TO RELATED APPLICATION(S)

This application is based on and claims priority under 35 U.S.C. 119 to Korean Patent Application No. 10-2023-0180629, filed on December 13, 2023, in the Korean Intellectual Property Office, the disclosure of which is herein incorporated by reference in its entirety.

### BACKGROUND OF THE INVENTION

### 1. Field of the invention

The present disclosure relates to a head for a taping device, and more specifically, to a head used in a device for winding an insulating tape or the like around a bus bar.

### 2. Description of the Prior Art

A bus bar is a rod-shaped conductor that enables electrical connections in a train, a vehicle, an aircraft, or the like.

With the recent rapid increase in the distribution of electric vehicles, the demand for bus bars is also increasing.

A bus bar, which is generally used in an electric vehicle, is a main component of a battery system and serves as an electrical passage for charging and discharging by interconnecting cells of a battery.

When a problem such as a short circuit occurs in some of the battery cells inside a battery module, temperature continues to rise, and when the temperature of the battery cells exceeds a critical temperature, thermal runaway may occur.

A flame or the like generated by thermal runaway phenomenon rapidly increases the temperature of adjacent battery cells, which may cause the thermal runaway phenomenon to rapidly spread to adjacent battery cells.

The flame generated by the thermal runaway phenomenon is transferred to a bus bar and causes a short circuit of the bus bar. Thus, in order to delay the transfer of the flame generated by the thermal runaway to the bus bar, the bus bar is used in the state in which mica tape or fiberglass tape is sequentially wound around the exterior of the bus bar.

Conventional bus bars have the problem of wasting time and money because the processes of winding different types of tape are conducted separately.

### [Prior Art Documents]

### [Patent Documents]

(Patent Document 1) Korean Patent No. 10-2592567 (registered on October 18, 2023)

### SUMMARY OF THE INVENTION

The present disclosure is to provide a head for a taping device (hereinafter, referred to as a "taping device head") that is capable of simultaneously conducting the processes of winding different types of tape.

In view of the foregoing, a taping device head according to an embodiment of the present disclosure may include: a housing including a plate having a cutout portion configured to allow a bus bar to pass therethrough, and an internal through hole communicating with the cutout portion; a plurality of first bearings coupled to the housing and arranged around the internal through hole along a first circular ring shape; a first ring gear having a first opening configured to allow the bus bar to pass therethrough, and an inner circumferential surface rotatably supported by the first bearing; a first tape feeder including a first abutment coupled to the first ring gear and a first mounting roller rotatably coupled to the first abutment; a first driver coupled to the housing and configured to rotate the first ring gear; a plurality of second bearings coupled to the housing, spaced outward from the first bearings, and arranged along a second circular ring shape; a second ring gear having a second opening configured to allow the bus bar to pass therethrough, and an inner circumferential surface rotatably supported by the second bearings; a second tape feeder including a second abutment coupled to the second ring gear and a second mounting roller rotatably coupled to the second abutment; and a second driver coupled to the housing and configured to rotate the second ring gear.

In addition, in view of the foregoing the housing of the taping device head according to an embodiment of the present disclosure may further include: a first coupling portion protruding from the plate along the first circular ring shape and having a plurality of first mounting grooves configured to accommodate the first bearings; a second coupling portion protruding from the plate along the second circular ring shape and having a plurality of second mounting grooves configured to accommodate the second bearings; and a rim protruding along an outer peripheral edge of the plate.

In addition, in view of the foregoing, the housing of the taping device head according to an embodiment of the present disclosure may further include: a first protective cover coupled to the first coupling portion and having the first circular ring shape in which a first cutout passage overlapping the cutout portion is provided; a second protective cover coupled to the second coupling portion and having the second circular ring shape in which a second cutout passage overlapping the cutout portion is provided; and a main cover coupled to the rim, having a third cutout passage overlapping the cutout portion and an internal expansion hole communicating with the third cutout passage, and configured to accommodate the second protective cover in the internal expansion hole.

In addition, in view of the foregoing the first driver of the taping device head according to an embodiment of the present disclosure may include: a first drive motor coupled to the housing; and a first power transmission coupled to the housing and configured to transmit the power of the first drive motor to the first ring gear.

In addition, in view of the foregoing the second driver of the taping device head according to an embodiment of the present disclosure may include: a second drive motor coupled to the housing; and a second power transmission coupled to the housing and configured to transmit the power of the second drive motor to the second ring gear.

In addition, in view of the foregoing the first power transmission of the taping device head according to an embodiment of the present disclosure may include: a drive gear unit coupled to the first drive motor; and a pair of auxiliary gear units coupled to the housing and configured to transmit the power of the drive gear.

In addition, in view of the foregoing in the first power transmission of the taping device head according to an embodiment of the disclosure, a length between two points where the auxiliary gear units are in contact with the outer peripheral surface of the first ring gear may be longer than the length of the first opening.

In addition, in view of the foregoing the second power transmission of the taping device head according to an embodiment of the present disclosure may include: a drive pulley coupled to the second drive motor; a plurality of auxiliary pulleys coupled to the housing; and a drive belt coupled to the drive pulley and the auxiliary pulleys to transmit power to the second ring gear.

In addition, in view of the foregoing in the second power transmission of the taping device head according to an embodiment of the disclosure, the length of the drive belt that is in contact with the outer peripheral surface of the second ring gear may be longer than the length of the second opening.

In addition, in view of the foregoing the taping device head according to an embodiment of the present disclosure may further include a movable support coupled to the housing and configured to support the bus bar located in the internal through hole.

With the taping device head according to an embodiment of the present disclosure, two types of tape can be wound around a bus bar in one process, thereby reducing the time and cost required for work.

In addition, with the taping device head according to an embodiment of the present disclosure, the speeds at which two types of tapes are wound around a bus bar can be independently set.

In addition, with the taping device head according to an embodiment of the present disclosure, the angles at which two types of tapes are wound around a bus bar can be independently set.

Furthermore, with the taping device head according to an embodiment of the present disclosure, the overlapping range at which two types of tapes are wound around a bus bar can be independently set.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 is a right-side perspective view of a taping device head according to an embodiment of the present disclosure;
FIG. 2 is an exploded perspective view of the taping device head according to an embodiment of the present disclosure;
FIG. 3 is a left-side perspective view of the taping device head according to an embodiment of the present disclosure;
FIG. 4 is a front view of the taping device head according to an embodiment of the present disclosure;
FIG. 5 is a rear view of the taping device head according to an embodiment of the present disclosure;
FIG. 6 is a right side view of the taping device head according to an embodiment of the present disclosure;
FIG. 7 is a view illustrating the inside of the right side of the taping device head according to an embodiment of the present disclosure;
FIG. 8 is a view illustrating a ring gear and a driver of the taping device head according to an embodiment of the present disclosure;
FIG. 9 is a left side view of the taping device head according to an embodiment of the present disclosure; and
FIG. 10 is a usage state view of the taping device head according to an embodiment of the present disclosure.

### DETAILED DESCRIPTION OF THE EXEMPLARY EMBODIMENTS

Hereinafter, embodiments of the present disclosure will be described in detail with reference to the accompanying drawings.

However, in the following description of the present disclosure, descriptions of already well-known functions or constructions will be omitted in order to make the gist of the present disclosure clear.

The X, Y, and Z axes indicated in the drawings are arbitrarily set for convenience of description, not for the purpose of limitation of rights, in which the X axis indicates a front-and-rear direction in which the arrow indicates the front side, the Y axis defines a left-and-right direction, and the Z axis defines the up-and-down direction.

Each direction described below is based on these definitions unless otherwise specifically limited.

In the description and the claims, the terms, up (upper side), down (lower side), left and right (lateral side or frank), front (anterior or front side), rear (posterior or rear side), and the like designating directions are determined based on the relative positions between drawings or components for convenience of description, rather than limiting the scope of protection, and each of the directions to be described below is based on this unless otherwise specifically limited.

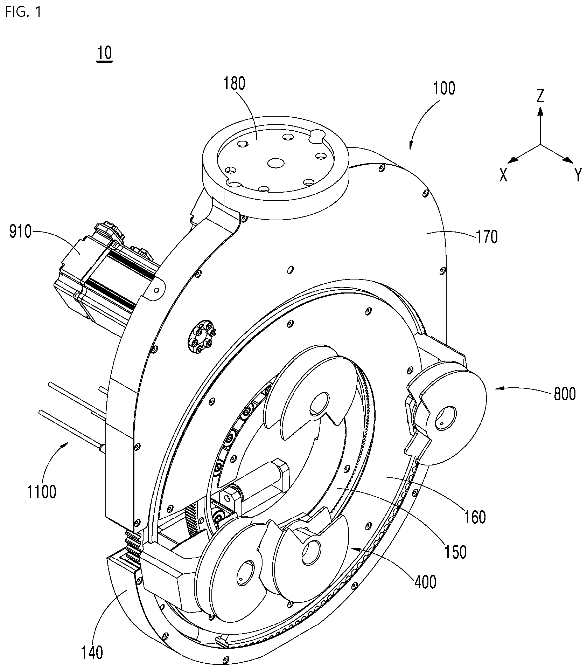

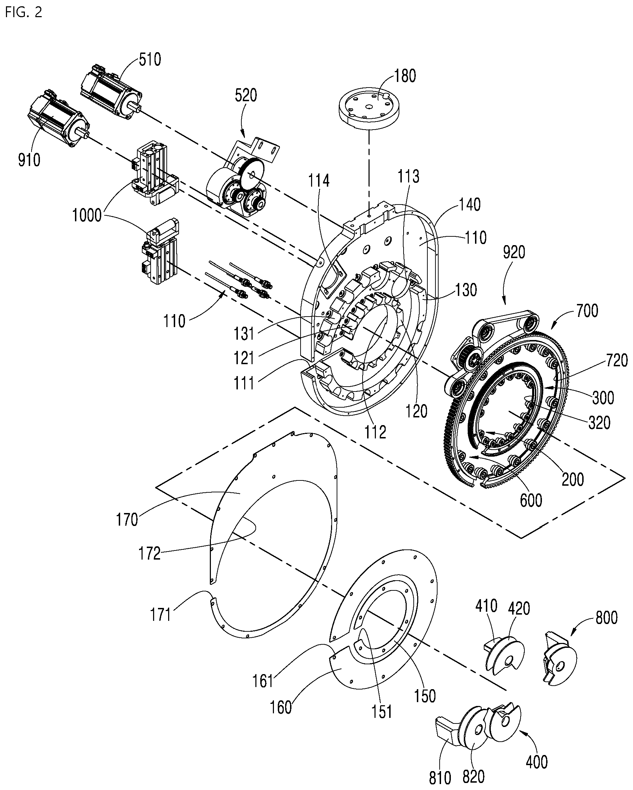

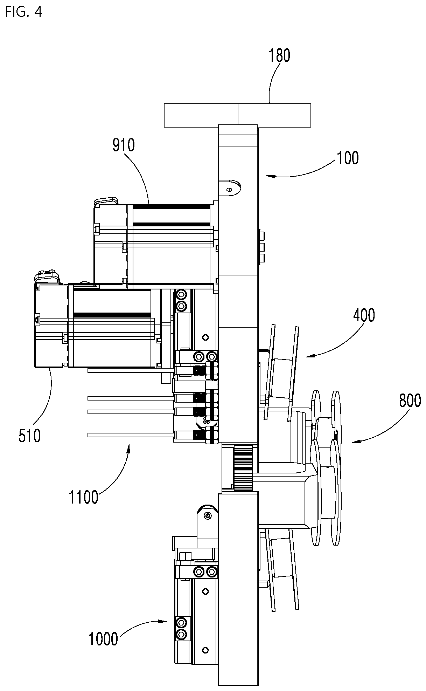

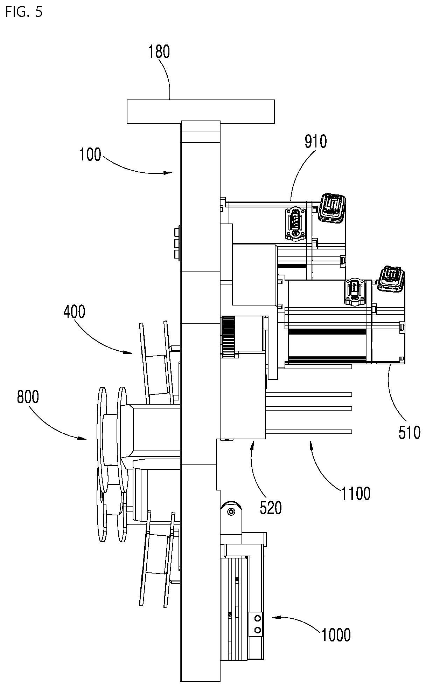

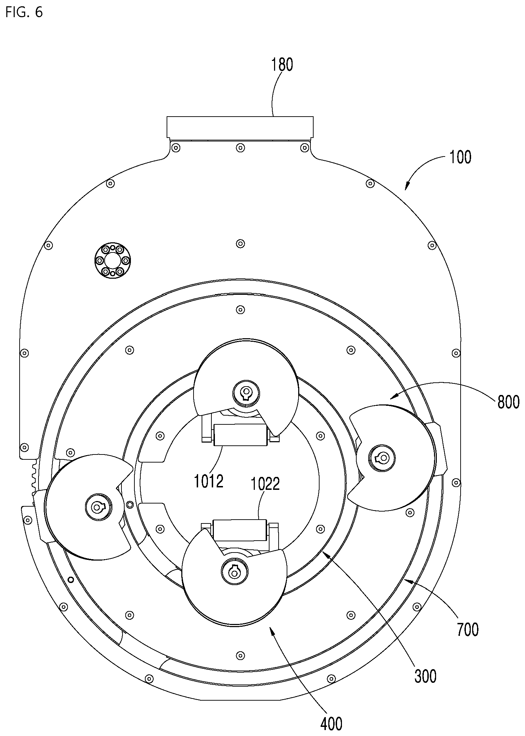

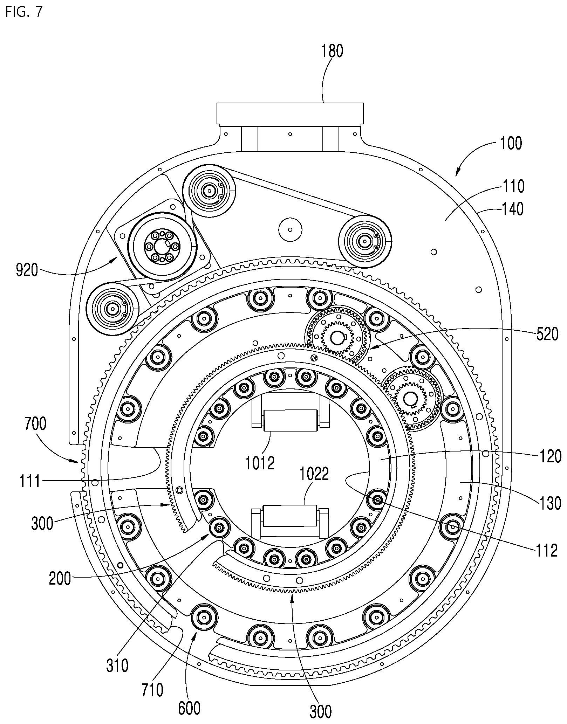

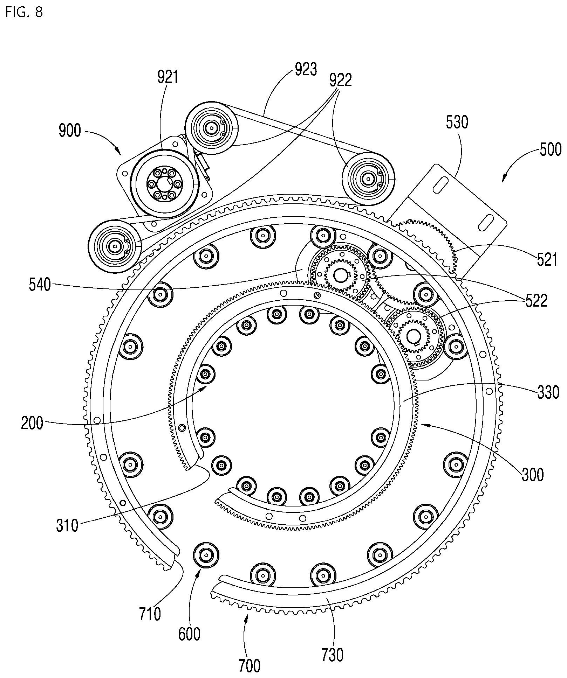

Referring to FIGS. 1 to 10, a taping device head 10 according to an embodiment of the present disclosure is configured to conduct a first tape winding process and a second tape winding process together. The taping device head may include: a housing 100 including a plate 110 in which a cutout portion 111 configured to allow a bus bar 3 to pass therethrough and an internal through hole 112 communicating with the cutout portion 111 are provided; a plurality of first bearings 200 coupled to the housing 100 and arranged around the internal through hole 112 along a first circular ring shape; a first ring gear 300 including a first opening 310 configured to allow the bus bar 3 to pass therethrough, and an inner circumferential surface rotatably supported by the first bearing 200; a first tape feeder 400 including a first abutment 410 coupled to the first ring gear 300 and a first mounting roller 420 rotatably coupled to the first abutment 410; a first driver 500 coupled to the housing 100 and configured to rotate the first ring gear 300; a plurality of second bearings 600 coupled to the housing 100, spaced outward from the first bearings 200, and arranged in a second circular ring shape; a second ring gear 700 including a second opening 710 configured to allow the bus bar 3 to pass therethrough, and an inner circumferential surface rotatably supported by the second bearing 600; a second tape feeder 800 including a second abutment 810 coupled to the second ring gear 700 and a second mounting roller 820 rotatably coupled to the second abutment 810; and a second driver 900 coupled to the housing 100 and configured to rotate the second ring gear 700.

The taping device head 10 may further include a controller (not illustrated) configured to operate the first driver 500 and the second driver 900.

The taping device head 10 may further include a movable support 1000 coupled to the housing 100 and configured to support the bus bar 3 located in the internal through hole 112.

The controller may operate the movable support 1000.

Referring to FIGS. 1 to 7, the housing 100 is configured to provide a space for mounting various components.

The housing 100 may be coupled to and moved by a robot arm 1 via an upper mounting portion 180.

The robot arm 1 may be operated by the controller.

The housing 100 may include: the plate 110 in which the cutout portion 111 and the internal through hole 112 are provided; a first coupling portion 120 protruding from the plate 110 along the first circular ring shape and having a plurality of first mounting grooves 121 configured to accommodate the first bearings 200; a second coupling portion 130 protruding from the plate 110 along the second circular ring shape and having a plurality of second mounting grooves 131 configured to accommodate the second bearings 600; a rim 140 protruding along the peripheral edge of the plate 110; a first protective cover 150 having the first circular ring shape, in which the first protective cover is coupled to the first coupling portion 120 and provides a first cutout passage 151 overlapping the cutout portion 111; a second protective cover 160 having the second circular ring shape, in which the second protective cover is coupled to the second coupling portion 130 and provides a second cutout passage 161 overlapping the cutout portion 111; and a main cover 170 coupled to the rim 140, and comprising a third cutout passage 171 overlapping the cutout portion 111 and an internal expansion hole 172 communicating with the third cutout passage 171, in which the main cover accommodates the second protective cover 160 in the internal expansion hole 172.

Referring to FIGS. 1 to 7, the plate 110 may have an internal through hole 112 which penetrates the interior of the plate in the left-and-right direction.

The internal through hole 112 may provide a space for taping of the bus bar 3.

The plate 110 may have a cutout portion 111 at the front side to connect the internal through hole 112 to the outside.

The cutout portion 111 may provide a passage through which the bus bar 3 located outside the housing 100 enters and exits the internal through hole 112 located inside of the housing 100.

The bus bar 3 is movable into the internal through hole 112 through the cutout portion 111 provided at the front portion of the plate 110.

The plate 110 may include first mounting holes 113 for mounting a pair of auxiliary gear units 522.

The first mounting holes 113 may be disposed between the first coupling portion 120 and the second coupling portion 130.

The plate 110 may have a second mounting hole 114 for mounting a second drive motor 910.

The first mounting holes 113 may be spaced outward from the second coupling portion 130.

Referring to FIGS. 1 to 7, the first coupling portion 120 protrudes rightward along the first circular ring shape from the plate 110 around the internal through hole 112.

The first circular ring refers to the shape in which the plurality of first bearings 200 coupled to the plate 110 around the internal through hole 112 are arranged.

The first circular ring may have an open portion located in the front portion thereof.

The first coupling portion 120 may have a plurality of first mounting grooves 121 that accommodate the plurality of first bearings 200.

A first protective cover 150 may be fixedly coupled to the first coupling portion 120.

Referring to FIGS. 1 to 7, the second coupling portion 130 protrudes rightward along the second circular ring shape from the plate 110.

The second circular ring refers to the shape in which the plurality of first bearings 600 coupled to the plate 110 are arranged.

The second circular ring may have an open portion located in the front portion thereof.

The second circular ring and the first circular ring have the same center, but the second circular ring has a larger diameter than the first circular ring.

The second coupling portion 130 may be spaced outward from the first coupling portion 120 in the radial direction.

The second coupling portion 130 may have a plurality of second mounting grooves 131 that accommodate the plurality of second bearings 600.

A second protective cover 160 may be fixedly coupled to the second coupling portion 130.

Referring to FIGS. 1 to 7, the rim 140 is protrudes rightward from the peripheral edge of the plate 110.

The rim 140 is an outer wall to protect a component coupled to the right surface of the plate 110.

The main cover 170 may be fixedly coupled to the rim 140.

The mounting portion 180 may be coupled to the upper portion of the rim 140 to couple the housing 100 to the robot arm 1.

Referring to FIGS. 1 to 7, the first protective cover 150 is configured to protect the first bearings 200.

The first protective cover 150 has the first circular ring shape and may be coupled to the first coupling portion 120.

The first protective cover 150 may be a first cutout passage 151 disposed to overlap the cutout portion 111 of the plate 110.

The first cutout passage 151 may be provided in the front portion of the first protective cover 150 to interconnect the inside and the outside of the first protective cover 150.

The first cutout passage 151 may provide a passage through which the bus bar 3 located outside the housing 100 enters and exits the internal through hole 112 located inside of the housing 100.

The bus bar 3 moving to the internal through hole 112 through the cutout portion 111 provided in the front portion of the plate 110 may pass through the first cutout passage 151.

The first protective cover 150 coupled to the first coupling portion 120 may cover and protect the first bearings 200 located in the first mounting grooves 121.

Referring to FIGS. 1 to 7, the second protective cover 160 is configured to protect the second bearings 600.

The second protective cover 160 has the second circular ring shape and may be coupled to the second coupling portion 130.

The second protective cover 160 may have a second cutout passage 161 disposed to overlap the cutout portion 111 of the plate 110.

The second cutout passage may be provided in the front portion of the second protective cover 160 to interconnect the inside and the outside of the second protective cover 160.

The second cutout passage may provide a passage through which the bus bar 3 located outside the housing 100 enters and exits the internal through hole 112 located inside of the housing 100.

The bus bar 3 moving to the internal through hole 112 through the cutout portion 111 provided in the front portion of the plate 110 may pass through the second cutout passage 161.

The second protective cover 160 coupled to the second coupling portion 130 may cover and protect the second bearings 600 located in the second mounting grooves 131.

The second protective cover 160 may be expanded toward the first protective cover 150.

Upon being expanded toward the first protective cover 150, the second protective cover 160 may cover and protect the pair of auxiliary gear units 522 located between the first coupling portion 120 and the second coupling portion 130.

Upon being expanded toward the first protective cover 150, the second protective cover 160 may cover and protect gear teeth provided on the outer peripheral surface of the first ring gears 300.

Referring to FIGS. 1 to 7, the main cover 170 is configured to protect a second power transmission 920.

The main cover 170 has a substantially C-like shape and may be coupled to the rim 140.

The main cover 170 may have a third cutout passage 171 disposed to overlap the cutout portion 111 of the plate 110.

The third cutout passage 171 may be provide in the front portion of the main cover 170 to interconnect the inside and outside of the main cover 170.

The third cutout passage 171 may provide a passage through which the bus bar 3 located outside the housing 100 enters and exits the internal through hole 112 located inside of the housing 100.

The bus bar 3 moving to the internal through hole 112 through the cutout portion 111 provided in the front portion of the plate 110 may pass through the third cutout passage 171.

The main cover 170 may have an internal expansion hole 172 communicating with the third cutout passage 171.

The internal expansion hole 172 may provide a circular space with a larger diameter than the second protective cover 160.

The main cover 170 may accommodate the second protective cover 160 in the internal expansion hole 172.

The main cover 170 coupled to the rim 140 may cover and protect the second power transmission 920 located on the plate 110.

Referring to FIGS. 1 to 7, the plurality of first bearings 200 are configured to rotatably support the first ring gear 300.

The plurality of first bearings 200 may be coupled to the plate 110 around the internal through hole 112.

The plurality of first bearings 200 coupled to the plate 110 may be arranged along the first circular ring shape.

The plurality of first bearings 200 arranged along the first circular ring shape may be in contact with the inner peripheral surface of the first ring gear 300 to support the rotation of the first ring gear 300.

The plurality of first bearings 200 may be located in the first guide groove 320 disposed at the inner peripheral surface of the first ring gear 300.

The plurality of first bearings 200 may be accommodated in the first mounting grooves 121 in the first coupling portion 120 and coupled to the plate 110.

The plurality of first bearings 200 may be covered and protected by the first protective cover 150 coupled to the first coupling portion 120.

Referring to FIGS. 1 to 7, the first ring gear 300 is configured to rotate the first tape feeder 400 around the internal through hole 112.

The first ring gear 300 has a circular ring shape and may have gear teeth on the outer peripheral surface.

The first ring gear 300 may be rotatably supported by the first bearings 200 on the inner peripheral surface thereof.

The first ring gear 300 may be have a first opening 310 configured to allow the bus bar 3 to pass therethrough.

The first opening 310 may interconnect the inside and the outside of the first ring gear 300.

The first opening 310 may provide a passage through which the bus bar 3 located outside the housing 100 enters and exits the internal through hole 112 located inside of the housing 100.

The bus bar 3 moving to the internal through hole 112 through the cutout portion 111 provided in the front portion of the plate 110 may pass through the first opening 310.

The first ring gear 300 may have a first guide groove 320 on its inner peripheral surface.

The first bearings 200 inserted into the first guide groove 320 to be in contact with the first guide groove 320 may support the first ring gear 300.

The first ring gear 300 may have a first side surface groove 330 having a circular ring shape along one or each side surface thereof.

The first abutment 410 of the first tape feeder 400 may be coupled to the first side surface groove 330 of the first ring gear 300.

The first ring gear 300 may be rotated by the first driver 500.

The gear teeth on the outer peripheral surface of the first ring gear 300 may be in contact with the first power transmission 520 of the first driver 500.

When the first ring gear 300 is rotated by the first driver 500, the first tape feeder 400 coupled to the first ring gear 300 may rotate about the bus bar 3 located in the internal through hole 112.

Referring to FIGS. 1 to 6, the first tape feeder 400 is configured to supply first tape.

The first tape feeder 400 may be coupled to the first ring gear 300 and rotate together with the first ring gear 300.

A pair of first tape feeders 400 may be provided at positions symmetrical with respect to the center of the first ring gear 300.

The first tape feeder 400 may include a first abutment 410 coupled to the first ring gear 300, and a first mounting roller 420 rotatably coupled to the first abutment 410.

The first abutment 410 is a portion coupled to a side surface of the first ring gear 300 to support the first mounting roller 420.

The first abutment 410 may be coupled to the first side surface groove 330 of the first ring gear 300.

The first mounting roller 420 may be a part on which a first tape winding roll is to be mounted.

The first mounting roller 420 may be coupled to the first abutment 410 to be inclined toward the center of the first ring gear 300.

The inclination of the first mounting roller 420 toward the center of the first ring gear 300 may determine the angle of the first tape wound around the bus bar 3.

The first tape feeder 400 may further include a first color sensor (not illustrated) configured to measure the remaining amount of the first tape.

The first color sensor may be coupled to the housing 100 or the first abutment 410.

The first color sensor may measure the remaining amount of the first tape by measuring the color of the first tape winding roll.

The first color sensor may be coupled to the housing 100 or the first abutment 410.

The first color sensor may provide information regarding the remaining amount of the first tape to the controller.

Referring to FIGS. 1 to 9, the first driver 500 is configured to rotate the first ring gear 300.

The first driver 500 may include a first drive motor 510 coupled to the housing 100, and a first power transmission 520 coupled to the housing 100 and configured to transmit the power of the first drive motor 510 to the first ring gear 300.

The first drive motor 510 may be fixedly coupled to a bracket 530 coupled to the left side of the plate 110.

The first power transmission 520 may include a drive gear unit 521 coupled to the first drive motor 510, and a pair of auxiliary gear units 522 coupled to the housing 100 and configured to transmit power of the drive gear unit 521.

The drive gear unit 521 may be rotatably coupled to the rotary shaft of the first drive motor 510.

The drive gear unit 521 may be located on the left side of the plate 110.

The pair of auxiliary gear units 522 may include gear holders 540 coupled to the left side of the plate 110, and auxiliary gears provided in the gear holders 540.

The auxiliary gears may pass through the first mounting holes 113 and transmit the rotation of the drive gear unit 521 to the first ring gear 300.

The length between two points where the pair of auxiliary gear units 522 are in contact the outer peripheral surface of the first ring gear 300 may be longer than the length of the first opening 310.

When the length between the two points where the pair of auxiliary gear units 522 are in contact with the outer peripheral surface of the first ring gear 300 is longer than the length of the first opening 310, the power of the first drive motor 510 may be continuously transmitted to the first ring gear 300.

Referring to FIGS. 1 to 7, the plurality of second bearings 600 are configured to rotatably support the second ring gear 700.

The plurality of second bearings 600 may be coupled to the plate 110 around the first bearings 200.

The plurality of second bearings 600 coupled to the plate 110 may be arranged along the second circular ring shape.

The plurality of second bearings 600 arranged along the second circular ring shape may be in contact with the inner peripheral surface of the second ring gear 700 to support the rotation of the second ring gear 700.

The plurality of second bearings 600 may be located in the second guide groove 720 disposed at the inner peripheral surface of the first ring gear 700.

The plurality of second bearings 600 may be accommodated in the second mounting grooves 131 in the second coupling portion 130 and coupled to the plate 110.

The plurality of second bearings 600 may be covered and protected by the second protective cover 160 coupled to the second coupling portion 130.

Referring to FIGS. 1 to 7, the second ring gear 700 is configured to rotate the second tape feeder 800 around the internal through hole 112.

The second ring gear 700 has a circular ring shape and may have gear teeth on the outer peripheral surface.

The second ring gear 700 may be rotatably supported by the second bearings 600 on the inner peripheral surface thereof.

The second ring gear 700 may be have a second opening 710 configured to allow the bus bar 3 to pass therethrough.

The second opening 710 may interconnect the inside and the outside of the second ring gear 700.

The second opening 710 may provide a passage through which the bus bar 3 located outside the housing 100 enters and exits the internal through hole 112 located inside of the housing 100.

The bus bar 3 moving to the internal through hole 112 through the cutout portion 111 provided in the front portion of the plate 110 may pass through the second opening 710.

The second ring gear 700 may have a second guide groove 720 on its inner peripheral surface.

The second bearings 600 inserted into the second guide groove 720 to be in contact with the second guide groove 720 may support the second ring gear 700.

The second ring gear 700 may have a second side surface groove 730 having a circular ring shape along one or each side surface thereof.

The second abutment 810 of the second tape feeder 800 may be coupled to the second side surface groove 730 of the second ring gear 700.

The second ring gear 700 may be rotated by the second driver 900.

The gear teeth on the outer peripheral surface of the second ring gear 700 may be in contact with the second power transmission 920 of the second driver 900.

When the second ring gear 700 is rotated by the second driver 900, the second tape feeder 800 coupled to the second ring gear 700 may rotate around the bus bar 3 located in the internal through hole 112.

Referring to FIGS. 1 to 6, the second tape feeder 800 is configured to supply second tape.

The second tape feeder 800 may be coupled to the second ring gear 700 and rotate together with the second ring gear 700.

A pair of second tape feeders 800 may be provided at positions symmetrical with respect to the center of the second ring gear 700.

The second tape feeder 800 may include a second abutment 810 coupled to the second ring gear 700, and a second mounting roller 820 rotatably coupled to the second abutment 810.

The second abutment 810 is a portion coupled to a side surface of the second ring gear 700 to support the second mounting roller 820.

The second abutment 810 may have a different length from the first abutment 410.

When the first abutment 410 and the second abutment 810 have different lengths, the distance of the first mounting roller 420 from the first ring gear 300 may be different from the distance of the second mounting roller 820 from the second ring gear 700.

When the distance of the first mounting roller 420 from the first ring gear 300 and the distance of the second mounting roller 820 from the second ring gear 700 are different from each other, the winding orders of the first tape and the second tape may be different.

The second abutment 810 may be coupled to the second side surface groove 730 of the second ring gear 700.

The second mounting roller 820 may a part on which a second tape winding roll is to be mounted.

The second mounting roller 820 may be coupled to the second abutment 810 to be inclined toward the center of the second ring gear 700.

The inclination of the second mounting roller 820 toward the center of the second ring gear 700 may determine the angle of the second tape wound around the bus bar 3.

The second mounting roller 820 may have an inclination different from that of the first mounting roller 420.

When the first mounting roller 420 has an inclination different from that of the second mounting roller 820, the angle of the first tape wound around the bus bar 3 may be different from the angle of the second tape.

When the angle of the first tape wound around the bus bar 3 and the angle of the second tape wound around the bus bar 3 are different from each other, the angle of the first tape wound around the bus bar 3 and the angle of the second tape wound around the bus bar 3 may be different from each other.

The second tape feeder 800 may further include a second color sensor (not illustrated) configured to measure the remaining amount of the second tape.

The second color sensor may be coupled to the housing 100 or the second abutment 810.

The second color sensor may measure the remaining amount of the second tape by measuring the color of the second tape winding roll.

The second color sensor may provide information regarding the remaining amount of the second tape to the controller.

The second tape may be the same type of tape as the first tape or may be a different type of tape.

Referring to FIGS. 1 to 9, the second driver 900 is configured to rotate the second ring gear 700.

The second driver 900 may include a second drive motor 910 coupled to the housing 100, and a second power transmission 920 coupled to the housing 100 and configured to transmit the power of the second drive motor 910 to the second ring gear 700.

The second drive motor 910 may be fixedly coupled to the left side of the plate 110.

The rotary shaft of the second drive motor 910 may be located on the right side of the plate 110 through the second mounting hole 114.

The second power transmission 920 may include a drive pulley 921 coupled to the second drive motor 910, a plurality of auxiliary pulleys 922 coupled to the housing 100, and a drive belt 923 that is coupled to the drive pulley 921 and the auxiliary pulley 922 and transmits power to the second ring gear 700.

The drive pulley 921 may be rotatably coupled to the rotary shaft of the second drive motor 910.

The driving pulley 921 and the auxiliary pulley 922 may be located on the right side of the plate 110.

The drive belt 923 may have a plurality of protrusions continuously provided on its outer peripheral surface to be engaged with gear teeth on the outer peripheral surface of the second ring gear 700.

By adjusting the position of the second drive motor 910 coupled to the left side of the plate 110, the tension of the drive belt 923 may be adjusted.

The length of the drive belt 923 that is in contact with the outer peripheral surface of the second ring gear 700 may be longer than the length of the second opening 710.

When the length of the drive belt 923 that is in contact with the outer peripheral surface of the second ring gear 700 is longer than the length of the second opening 710, the power of the second drive motor 910 may be continuously transmitted to the second ring gear 700.

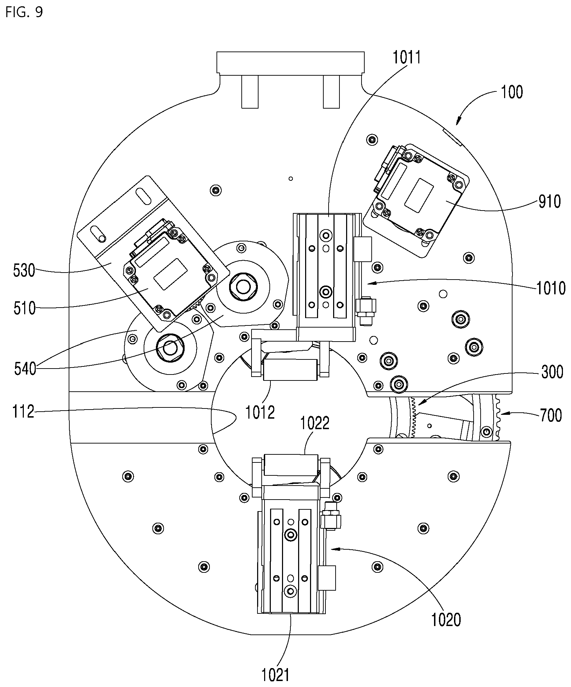

Referring to FIG. 9, the movable support 1000 is configured to support the bus bar 3 while the taping device head 10 moves along the longitudinal direction of the bus bar 3.

The movable support 1000 may be coupled to the left side of the plate 110.

The movable support 1000 may be composed in a pair to support the bus bar 3 located in the internal through hole 112.

The movable supports 1000 may include a first support 1010 and a second support 1020.

The first support 1010 and the second support 1020 may be located in opposite directions with respect to the internal through hole 112.

The first support 1010 may include a first cylinder 1011 coupled to the housing 100, and a first support roller 1012 coupled to a rod of the first cylinder 1011 and configured to move toward the bus bar 3 to support one side surface of the bus bar 3.

The first cylinder 1011 may include a rod that is extended and contracted toward and away from the bus bar 3.

When the rod of the first cylinder 1011 is extended and contracted, the first support roller 1012 may be moved toward and away from the bus bar 3.

The second support 1020 may include a second cylinder 1021 coupled to the housing 100, and a second support roller 1022 coupled to a rod of the second cylinder 1021 and configured to move toward the bus bar 3 to support the other side surface of the bus bar 3.

The second cylinder 1021 may include a rod that is extended and contracted toward and away from the bus bar 3.

When the rod of the second cylinder 1021 is extended and contracted, the second support roller 1022 may be moved toward and away from the bus bar 3.

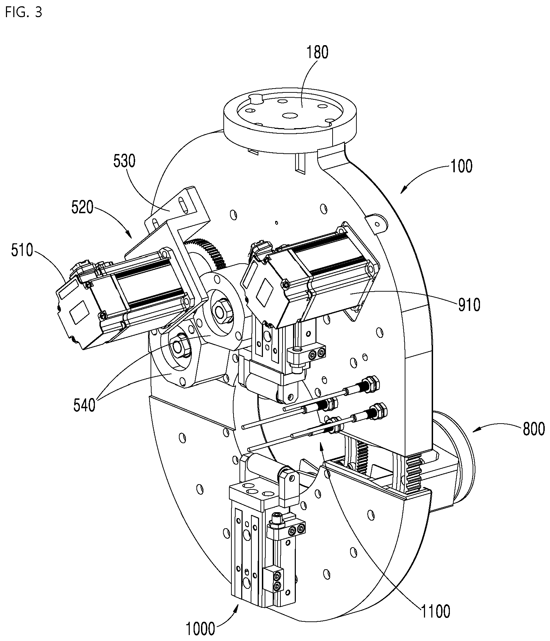

Referring to FIG. 3, the taping device head 10 may further include a speed sensor 1100 configured to measure the rotation speeds or rotation positions of the first ring gear 300 and the second ring gear 700.

The speed sensor 1100 may provide information about the rotation speeds or rotation positions of the first ring gear 300 and the second ring gear 700 to the controller.

The controller may adjust the rotation speeds or rotation positions of the first ring gear 300 and the second ring gear 700.

The controller may adjust the position, direction, and moving speed of the taping device head 10 by operating the robot arm 1.

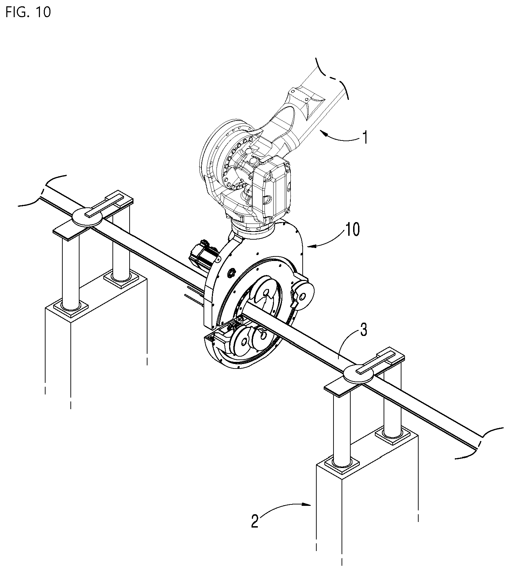

Referring to FIG. 10, the controller operates the first driver 500, the second driver 900, and the movable support 1000 to conduct a taping operation on the bus bar 3 fixed to a holder 2.

The bus bar 3 may enter and exit a work area of the taping device head 10 through the entrance area of the taping device head 10.

The entrance area is a space that interconnects the work area provided inside the taping device head 10 and the outside of the taping device head 10.

The entrance area is a passage that is provided in the front portion of the taping device head 10 to allow the bus bar 3 to pass therethrough.

The entrance area may be configured with the cutout portion 111 of the plate 110, the first cutout passage 151 of the first protective cover 150, the second cutout passage 161 of the second protective cover 160, the third cutout passage 171 of the main cover 170, the first opening 310 of the first ring gear 300, and the second opening 710 of the second ring gear 700.

The entrance area may be formed when the first opening 310 of the first ring gear 300 and the second opening 710 of the second ring gear 700 overlap the cutout portion 111 of the plate 110.

The work area is a space where the bus bar 3 can be located inside the taping device head 10.

The work area may be connected to the outside of the taping device head 10 through the entrance area provided in the front portion of the taping device head 10.

The work area is a space in which taping of the bus bar 3 is performed, and which allows the bus bar 3 to maintain a predetermined distance from the taping device head 10 without colliding with the taping device head 10 when the taping device head 10 moves while winding the first tape T1 and the second tape T2 around the bus bar 3.

The work area may be configured with the internal through hole 112 of the plate 110, the central portion of the first protective cover 150, the central portion of the second protective cover 160, the inner expansion hole 172 of the main cover 170, the central portion of the first ring gear 300, and the central portion of the second ring gear 700.

The work area is a space that is always open in the left-and-right direction (the longitudinal direction of the bus bar).

A bus bar taping method using the taping device head 10 according to an embodiment of the disclosure may include: a first step of fixing opposite sides of the bus bar 3 in the longitudinal direction to the holder 2 and mounting a first winding roll, around which the first tape T1 is wound, and a second winding roll, around which the second tape T2 is wound, respectively, on the first tape feeder 400 and the second tape feeder 800 of the taping device head 10 mounted on the robot arm 1; a second step of moving the taping device head 10 to position the bus bar 3 at the center of the work area of the taping device head 10 through the entrance area of the taping device head 10; a third step of attaching distal ends of the first tape T1 and the second tape T2 to one side of the bus bar 3 in the longitudinal direction; a fourth step of moving the taping device head 10 to the other side of the bus bar 3 in the longitudinal direction while rotating the first tape feeder 400 and the second tape feeder 800 around the bus bar 3; a fifth step of, when the taping device head 10 reaches the other side of the bus bar 3 in the longitudinal direction, stopping the rotation of the first tape feeder 400 and the second tape feeder 800 and cutting the first tape T1 and the second tape T2; a sixth step of moving the taping device head 10 to position the bus bar 3 outside the work area of the taping device head 10 through the entrance area of the taping device head 10; and a seventh step of removing the bus bar 3 from the holder 2.

With the bus bar taping method using the taping device head 10, the first tape T1 and the second tape T2 can be wound together on the bus bar 3 by using the taping device head 10.

Although specific embodiments of the present disclosure have been described and illustrated above, it is evident to a person ordinarily skilled in the art that the present disclosure is not limited to the described embodiments, and various changes and modifications can be made without departing from the technical idea and scope of the present disclosure.

Accordingly, such modifications or variations should not be understood individually from the technical spirit or viewpoint of the present disclosure, and the modifications and variations should be regarded as falling within the scope of the claims of the present disclosure.

## Claims

1. A head for a taping device, the head comprising:
a housing comprising a plate having a cutout portion configured to allow a bus bar to pass therethrough, and an internal through hole communicating with the cutout portion;
a plurality of first bearings coupled to the housing and arranged around the internal through hole along a first circular ring shape;
a first ring gear having a first opening configured to allow the bus bar to pass therethrough, and an inner circumferential surface rotatably supported by the first bearing;
a first tape feeder comprising a first abutment coupled to the first ring gear and a first mounting roller rotatably coupled to the first abutment;
a first driver coupled to the housing and configured to rotate the first ring gear;
a plurality of second bearings coupled to the housing, spaced outward from the first bearings, and arranged along a second circular ring shape;
a second ring gear having a second opening configured to allow the bus bar to pass therethrough, and an inner circumferential surface rotatably supported by the second bearings;
a second tape feeder comprising a second abutment coupled to the second ring gear and a second mounting roller rotatably coupled to the second abutment; and
a second driver coupled to the housing and configured to rotate the second ring gear.

2. The head of claim 1, wherein the housing further comprises:
a first coupling portion protruding from the plate along the form of the first circular ring and having a plurality of first mounting grooves configured to accommodate the first bearings;
a second coupling portion protruding from the plate along the form of the second circular ring and having a plurality of second mounting grooves configured to accommodate the second bearings; and
a rim protruding along an outer peripheral edge of the plate.

3. The head of claim 2, wherein the housing further comprises:
a first protective cover coupled to the first coupling portion and having the first circular ring shape in which a first cutout passage overlapping the cutout portion is provided;
a second protective cover coupled to the second coupling portion and having the second circular ring shape in a second cutout passage overlapping the cutout portion is provided; and
a main cover coupled to the rim, having a third cutout passage overlapping the cutout portion and an internal expansion hole communicating with the third cutout passage, and configured to accommodate the second protective cover in the internal expansion hole.

4. The head of claim 1, wherein the first driver comprises:
a first drive motor coupled to the housing; and
a first power transmission coupled to the housing and configured to transmit power of the first drive motor to the first ring gear, and
wherein the second driver comprises:
a second drive motor coupled to the housing; and
a second power transmission coupled to the housing and configured to transmit power of the second drive motor to the second ring gear.

5. The head of claim 4, wherein the first power transmission comprises:
a drive gear unit coupled to the first drive motor; and
a pair of auxiliary gear units coupled to the housing and configured to transmit power of the drive gear, and
wherein a length between two points where the auxiliary gear units are in contact with an outer peripheral surface of the first ring gear is longer than a length of the first opening.

6. The head of claim 4, wherein the second power transmission comprises:
a drive pulley coupled to the second drive motor;
a plurality of auxiliary pulleys coupled to the housing; and
a drive belt coupled to the drive pulley and the auxiliary pulleys to transmit power to the second ring gear, and
wherein a length of the drive belt that is in contact with an outer peripheral surface of the second ring gear is longer than a length of the second opening.

7. The head of claim 1, further comprising a movable support coupled to the housing and configured to support the bus bar located in the internal through hole.
